Europäisches Patentamt

(19) European Patent Office

Office européen des brevets

(11) Numéro de publication: **0 236 179**
**B1**

(12) **FASCICULE DE BREVET EUROPEEN**

(45) Date de publication du fascicule du brevet: **28.11.90**

(21) Numéro de dépôt: **87400188.6**

(22) Date de dépôt: **28.01.87**

(51) Int. Cl.⁵: **H 02 B 11/12**

(54) **Mécanisme d'embrochage et de débrochage d'un disjoncteur électrique avec circuits principaux et auxiliaires.**

(30) Priorité: **10.02.86 FR 8601880**
**10.02.86 FR 8601881**

(43) Date de publication de la demande:
**09.09.87 Bulletin 87/37**

(45) Mention de la délivrance du brevet:
**28.11.90 Bulletin 90/48**

(84) Etats contractants désignés:
**DE GB IT SE**

(56) Documents cités:
**DE-A-2 165 939**
**DE-A-3 105 261**
**GB-A- 911 156**
**US-A-2 921 998**
**US-A-4 020 301**

(73) Titulaire: **MERLIN GERIN**
**Rue Henri Tarze**
**F-38050 Grenoble Cédex (FR)**

(72) Inventeur: **Gerbert-Gaillard, Alain**
**Merlin Gerin**
**F-38050 Grenoble Cedex (FR)**
Inventeur: **Nebon, Jean-Pierre**
**Merlin Gerin**
**F-38050 Grenoble Cedex (FR)**

(74) Mandataire: **Kern, Paul**
**Merlin Gerin Sce. Brevets 20, rue Henri Tarze**
**F-38050 Grenoble Cédex (FR)**

Courier Press, Leamington Spa, England.

EP 0 236 179 B1

**Description**

L'invention est relative à un mécanisme réversible d'embrochage et de débrochage pour un disjoncteur électrique extractible et multipolaire, équipé de circuits principaux à bornes et de circuits auxiliaires associés à un dispositif de connexion ayant des connecteurs fixes et des connecteurs conjugués mobiles, le disjoncteur étant monté sur un support mécanique mobile à l'intérieur d'un châssis fixe en forme de caisson ayant une ouverture frontale, deux parois latérales opposées, et un socle postérieur fixe de raccordement des bornes principales de chaque pôle, le support mécanique du disjoncteur étant guidé au moyen d'une paire de glissières fixées symétriquement aux parois latérales du châssis et s'étendant parallèlement selon la direction longitudinale d'embrochage, ledit mécanisme comprenant un dispositif de manoeuvre associé à une chaîne cinématique de transmission de mouvement susceptible d'occuper une première position "embrochée" dans laquelle les circuits principaux et auxiliaires du disjoncteur sont connectés, une deuxième position de "test" ou d'essai dans laquelle les circuits principaux sont déconnectés, et les circuits auxiliaires sont connectés, et une troisième position "débrochée" dans laquelle les circuits principaux et auxiliaires sont déconnectés.

Les documents US-A-4020 301 et DE-A-2 165 939 dérivent des dispositifs du genre mentionné ci-dessus.

Selon un disjoncteur débrochable connu du genre mentionné, l'un des connecteurs des circuits auxiliaires est fixé au disjoncteur sur la même paroi traversée par les bornes des circuits principaux, et le connecteur conjugué est solidarisé au socle de raccordement. L' enfichage et la déconnexion des connecteurs des circuits auxiliaires s'effectuent dans le sens de déplacement du disjoncteur. La chaîne cinématique de transmission de mouvement constitue une liaison desmodromique permanente entre le dispositif de manoeuvre et le support mécanique mobile du disjoncteur. Au cours de l'actionnement du mécanisme, le disjoncteur occupe trois positions distinctes, échelonnés le long de la direction longitudinale d'embrochage. Chaque position du disjoncteur correspond à l'une des positions embrochée, d'essai et débrochée des circuits principaux et auxiliaires. La présence de ces trois positions engendre une augmentation de la course d'embrochage et de la course opposée de débrochage et il en résulte un encombrement important du châssis.

La plupart des disjoncteurs débrochables comporte d'autre part un châssis fixe équipé du socle de raccordement et d'une paire de rails escamotables sur lesquels peuvent rouler des organes de roulement solidaires du disjoncteur. Ce dernier est généralement entouré par un cadre métallique auxiliaire dont les parois latérales opposées portent les organes de roulement, l'ensemble étant déplaçable à l'intérieur du châssis fixe lors de l'actionnement du mécanisme d'embrochage. La présence de ce cadre métallique auxiliaire complique l'agencement des moyens de guidage et de verrouillage du disjoncteur, et contribue à augmenter le prix et le poids de l'ensemble.

Un premier objet de l'invention consiste à réduire la course du disjoncteur débrochable pour diminuer l'encombrement du châssis.

Un deuxième objet de l'invention consiste à simplifier le support et les organes de verrouillage d'un disjoncteur débrochable.

Le mécanisme selon l'invention est caractérisé en ce que les connecteurs fixes du dispositif de connexion des circuits auxiliaires sont solidaires du disjoncteur et que la chaîne cinématique de transmission de mouvement du mécanisme réversible comporte une première liaison mécanique entre le dispositif de manoeuvre et un dispositif d'entraînement des connecteurs mobiles du dispositif de connexion durant la phase d'actionnement correspondant à l'intervalle situé entre les deuxième et troisième positions, et une deuxième liaison mécanique entre le dispositif de manoeuvre et un organe d'accouplement du support mécanique mobile du disjoncteur durant une autre phase d'actionnement correspondant à l'intervalle ménagé entre les deuxième et première positions, l'ensemble étant agencé pour que la première liaison mécanique soit active lors de la rupture de la deuxième liaison mécanique, et inversement, autorisant la déconnexion ou l'enfichage des connecteurs fixes et mobiles des circuits auxiliaires lorsque le disjoncteur reste immobile. Le mécanisme d'embrochage permet à la fois de déplacer le disjoncteur entre les positions embrochée et débrochée avec test et d'actionner automatiquement le dispositif d'entraînement des connecteurs mobiles lorsque le disjoncteur ne bouge pas.

Les connecteurs fixes du dispositif de connexion se trouvent avantageusement sur l'une des faces horizontales supérieure ou inférieure du boîtier isolant renfermant le disjoncteur. Le dispositif d'entraînement est agencé pour engendrer un déplacement en translation verticale des connecteurs mobiles lors de l'établissement de la première liaison mécanique et de la rupture de la deuxième liaison mécanique, ledit déplacement étant perpendiculaire à la direction longitudinale d'embrochage ou de débrochage des circuits principaux du disjoncteur.

Le disjoncteur repose sur un support mécanique simplifié comportant une paire de rails susceptibles de coulisser dans des glissières symétriques du châssis, l'organe d'accouplement de la deuxième liaison mécanique étant fixé sur un flasque solidaire de chaque rail. En position embrochée, le disjoncteur est verrouillé positivement par les glissières.

Les connecteurs fixes du dispositif de connexion complémentaire sont en liaison électrique avec le déclencheur électronique intégré dans le disjoncteur, et les différents auxiliaires électriques de mesure, de contrôle et de signalisation. Dans la position embrochée, et dans la position de test, les connecteurs mobiles sont enfichés dans les connecteurs fixes pour autoriser les prises d'informations et l'émission d'ordres vers les auxiliaires électriques et le déclencheur.

Les différents états des circuits principaux et auxiliaires sont signalés au moyen d'un indicateur de position situé en face avant sur un plastron fixe.

Le support mécanique mobile du disjoncteur comporte:

une paire de rails symétriques montés à coulissement longitudinal dans des glissières correspondantes fixées aux parois latérales opposées du châssis, le disjoncteur ayant au moins un organe d'accrochage positionné dans un organe conjugué de chaque rail,.

un système de blocage équipé d'un organe de verrouillage coopérant avec des moyens de retenue des rails pour assurer le blocage mécanique du disjoncteur dans les glissières en positions embrochée et débrochée, ledit organe de verrouillage étant solidaire d'un levier de commande monté à pivotement sur un axe du châssis,

une première liaison mécanique entre ledit levier de commande et une poignée d'extraction, susceptible de provoquer le décrochage du système de blocage par désencliquetage de l'organe de verrouillage et des moyens de retenue.

et une deuxième liaison mécanique est agencée entre la chaîne cinématique du dispositif de manoeuvre et ledit levier de commande pour assurer le déclenchement forcé du disjoncteur lorsque le support mécanique est déplacé de la position embrochée vers la position débrochée.

Un tel support mécanique est dépourvu de tout cadre métallique auxiliaire. Le disjoncteur est du type à boîtier isolant moulé, et est simplement posé sur les deux rails, l'ensemble pouvant alors coulisser dans les glissières correspondantes du châssis fixe.

Le déverrouillage du système de blocage intervient en position embrochée et en position débrochée par le retrait manuel de la poignée d'extraction lors de l'établissement de la première liaison mécanique.

Les moyens de retenue des rails comportent un crantage principal et une saignée auxiliaire décalés longitudinalement l'un de l'autre pour former respectivement un premier verrouillage positif bidirectionnel du support mobile lorsque le disjoncteur arrive en position embrochée, et un deuxième accrochage unidirectionnel dudit support en position débrochée empêchant l'extraction du disjoncteur, mais autorisant l'embrochage.

L'extrémité postérieure de chaque rail est avantageusement taillée en biseau pour coopérer avec un dispositif d'actionnement des volets d'isolement, comprenant une paire de joues de commande articulées sur un axe porté par une paroi latérale du châssis.

Une pluralité d'organes auxiliaires de sécurité sont agencés dans un plastron du châssis, et coopèrent avec un verrou principal susceptible d'interdire l'actionnement du dispositif de manoeuvre par la manivelle.

La manivelle est articulée en plusieurs éléments, et peut être rangée dans un fourreau fixe aligné longitudinalement avec un orifice du plastron.

D'autres avantages ressortiront plus clairement de la description qui va suivre d'un mode de réalisation de l'invention, donné à titre d'exemple non limitatif et représenté aux dessins annexés dans lesquels:

la figure 1 montre une vue schématique de profil du disjoncteur en position débrochée;

la figure 2 représente une vue de profil du mécanisme d'embrochage dans la position débrochée du disjoncteur selon la figure 1;

les figures 3 et 5 sont des vues identiques de la figure 1, respectivement en positions d'essai et embrochée du disjoncteur;

les figures 4 et 6 sont des vues identiques du mécanisme de la figure 2, respectivement en positions d'essai et embrochée du disjoncteur;

la figure 7 est une vue de face du châssis après mise en place du disjoncteur sur le support mécanique mobile, la demi-vue de droite montrant le disjoncteur en position d'extraction, et la demi-vue de gauche représentant le disjoncteur après insertion dans le châssis;

la figure 8 est une vue de face du châssis montrant le dispositif de manoeuvre et la liaison cinématique avec les connecteurs mobiles du dispositif de connexion, ce dernier étant représenté en position déconnectée;

la figure 9 est une vue éclatée en perspective du sous-ensemble comprenant le disjoncteur et le châssis;

la figure 10 est une vue en coupe du disjoncteur équipé du dispositif de connexion selon l'invention;

les figures 11 et 12 montrent le support mécanique mobile du disjoncteur, respectivement en positions embrochée et d'extraction;

la figure 13 représente une vue éclatée en perspective d'une partie du mécanisme d'embrochage montrant le dispositif d'actionnement à crémaillère;

la figure 14 montre une vue éclatée en perspective d'une autre partie du mécanisme d'embrochage, montrant le support mobile du disjoncteur et le dispositif d'entraînement des connecteurs mobiles;

la figure 15 est une vue détaillée, à échelle agrandie, d'une came de commande du dispositif d'actionnement selon la figure 13;

les figures 16 et 17 représentent des vues de profil du système de blocage du disjoncteur, respectivement en positions embrochée et débrochée;

la figure 18 montre une vue en perspective du châssis fixe et du mécanisme d'embrochage après enlèvement du disjoncteur;

la figure 19 représente une vue de profil du levier de commande lors d'un déclenchement forcé au cours du débrochage du disjoncteur;

la figure 20 est une vue en élévation du dispositif selon la figure 19;

la figure 21 montre le raccordement électrique des connecteurs mobiles à un bornier fixe accessible à l'utilisateur;

la figure 22 représente une vue en perspective du dispositif d'actionnement des volets d'isolement;

la figure 23 est une vue de détail de la figure 13, montrant le verrou associé à divers organes de sécurité;

la figure 24 est une vue en plan de la figure 23, en position de blocage du verrou.

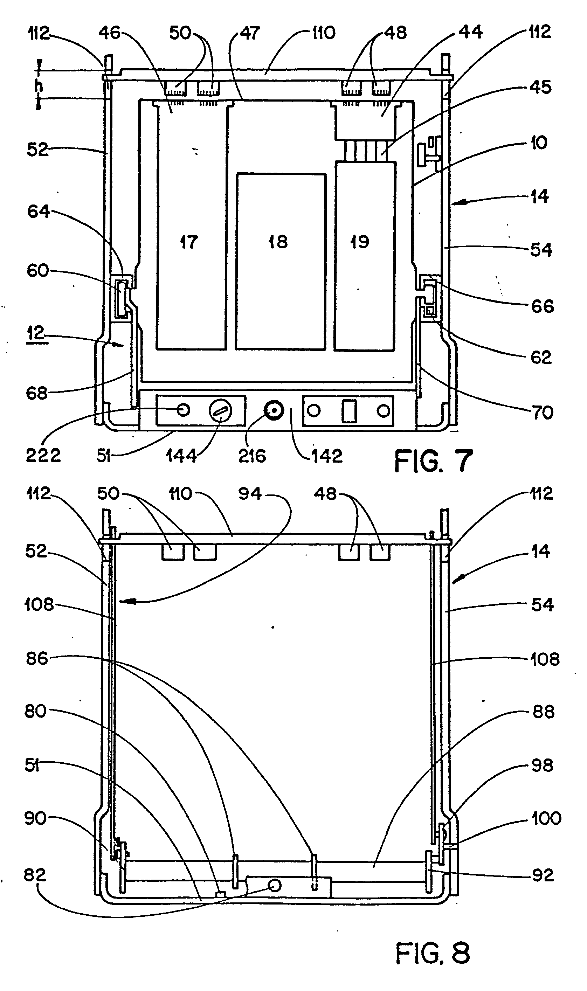

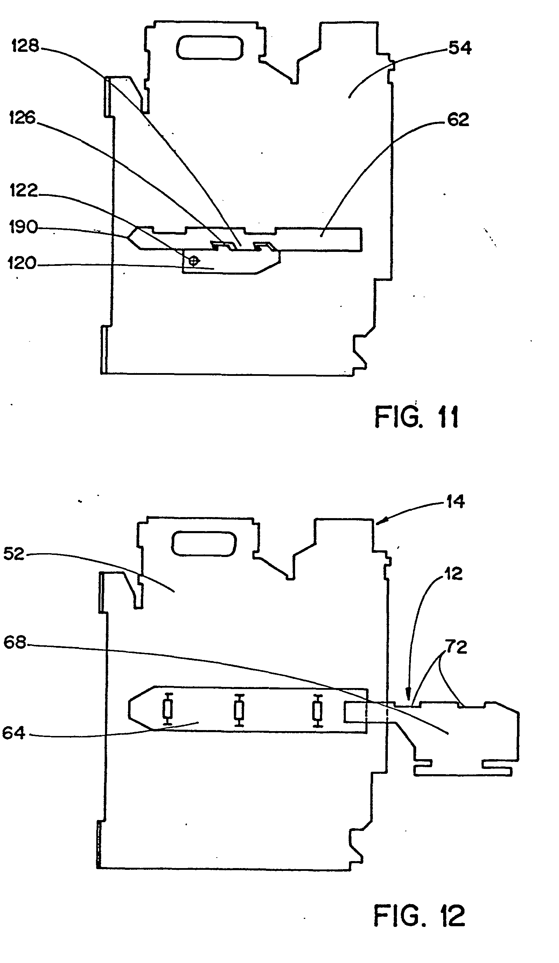

Sur les figures, un appareillage électrique extractible à basse tension comporte un disjoncteur 10 multipolaire débrochable monté sur un support mécanique 12 mobile en translation à l'intérieur d'un châssis 14 fixe en forme de caisson parallélépipédique. Le disjoncteur 10 (figures 7 et 10) de calibres élevés, notamment jusqu'à 4000 Ampères, est logé dans un boîtier 16 en matériau isolant subdivisé en un compartiment antérieur 11 situé près de la face avant 13, et un compartiment postérieur 15 renfermant les différents pôles. Le compartiment antérieur 11 renferme un dispositif de commande 18 à levier d'armement 20 d'un système à ressort accumulateur d'énergie (non représenté), un déclencheur 17 électronique provoquant un déclenchement automatique lors de l'apparition d'un courant de défaut, notamment une surcharge, un court-circuit ou un défaut à la terre, et des auxiliaires 19 électriques de mesure de signalisation et de contrôle, notamment des contacts auxiliaires de signalisation du déclenchement ou de l'état du disjoncteur, un déclencheur voltmétrique MN ou MX à manque et/ou émission de tension, etc... Chaque pôle du compartiment postérieur 15 comporte un système de contacts de coupure 22, 24, dont l'un est fixe et l'autre mobile, une chambre 26 d'extinction d'arc, et une paire de bornes principales 28, 30, faisant saillie de la face arrière 31 du boîtier 16. L'agencement interne et le fonctionnement du disjoncteur 10 font l'objet d'une description détaillée dans les demandes de brevets français No 8.516.345, 8.516.346, 8.516.347.

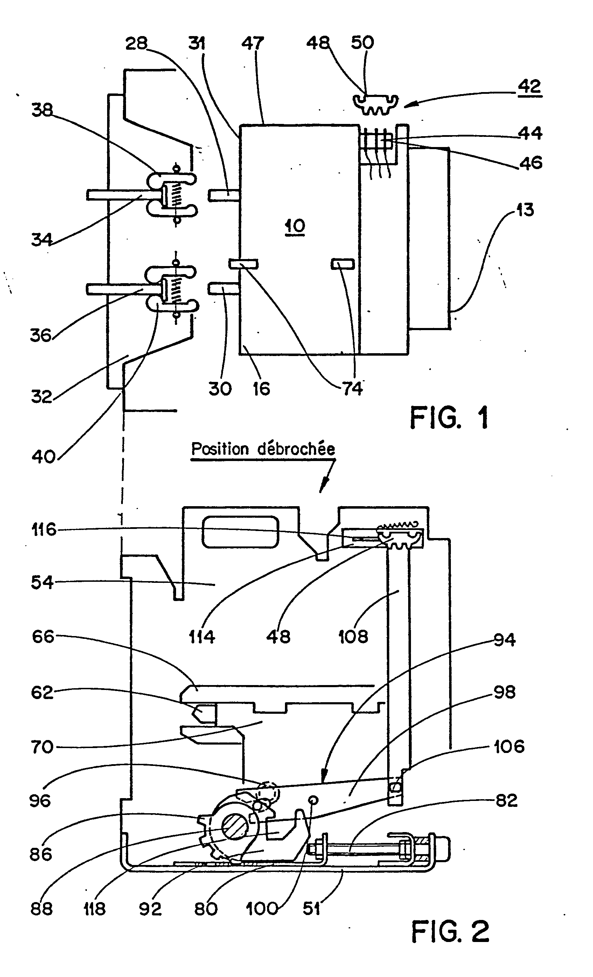

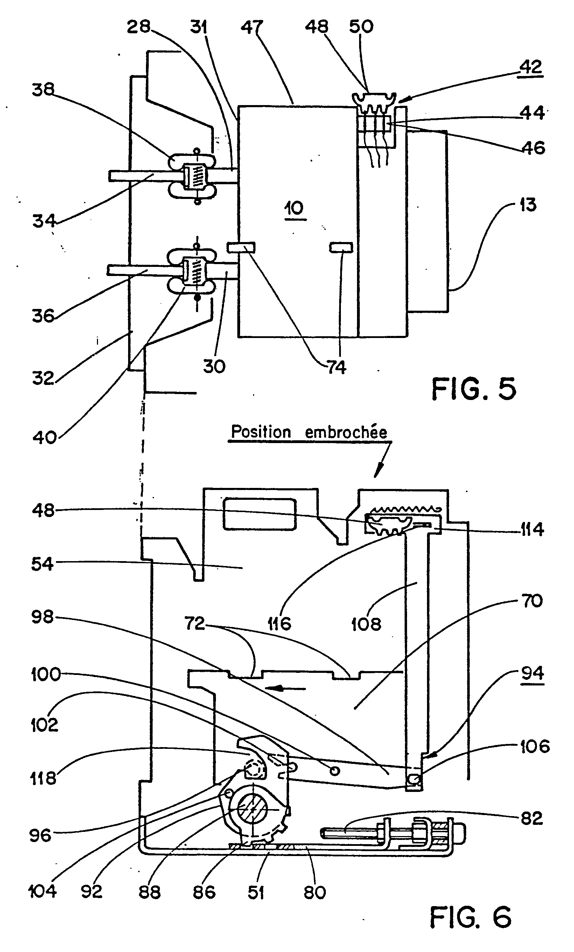

Le fond arrière du châssis 14 est agencé en un socle de raccordement 32 (figures 1, 3, 5 et 9) isolant, traversé par des plages 34, 36, fixes équipées de pinces d'embrochage 38, 40. En position embrochée (figure 5) du disjoncteur 10, les bornes principales 28, 30, se trouvent en engagement avec les pinces 38, 40, d'embrochage pour l'amenée de courant circulant dans les conducteurs actifs du réseau. La structure du socle de raccordement 32 est décrite en détail dans la demande de brevet français No. 8508597. En plus des bornes principales 28, 30, le disjoncteur 10 comporte un dispositif de connexion complémentaire, désigné par le repère général 42, susceptible d'établir ou d'interrompre la liaison électrique entre, d'une part les auxiliaires 19, le déclencheur 17 et d'autre part des moyens extérieurs de commande et de surveillance à distance. Le dispositif de connexion 42 (figure 7) est doté d'un premier connecteur 44 fixe relié par des conducteurs de câblage 45 aux différents auxiliaires électriques 19, et d'un deuxième connecteur 46 fixe en liaison avec le déclencheur 17 électronique. Les deux connecteurs 44, 46 fixes situés sur la paroi supérieure 47 du boîtier 16 au niveau du compartiment antérieur 11 du disjoncteur 10, sont accessibles sans démontage du boîtier 16,et coopèrent par enfichage avec des connecteurs 48, 50, mobiles associés à un faisceau de liaisons électriques extérieures. Les connecteurs fixes 44, 46, sur le disjoncteur 10 sont du type à contacts mâles, alors que les connecteurs mobiles 48, 50, sont du type opposé à contacts femelle, ou inversement.

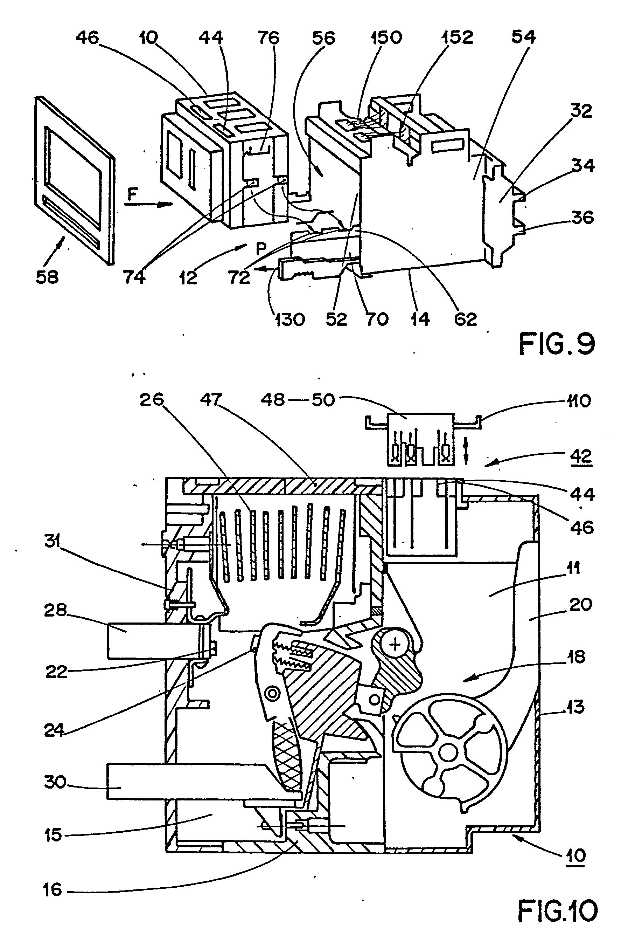

Le châssis 14 métallique en forme de caisson comporte une plaque de base 51 et deux parois 52, 54, latérales opposées (figures 7, 8, 9 et 14) délimitant une ouverture 56 frontale pour l'insertion ou le retrait de l'appareillage extractible. L'ouverture 56 peut être obturée par une porte 58 lorsque le disjoncteur 10 est en service. A l'opposé de l'ouverture 56 frontale se trouve le socle 32 de raccordement du disjoncteur 10. Le support mécanique 12 mobile du disjoncteur 10 est équipé d'une paire de rails 60, 62, susceptibles de coulisser dans deux glissières 64, 66, symétriques fixées à mi-hauteur aux parois latérales 52, 54, correspondantes du châssis 14. A chaque rail 60, 62, est solidarisé un flasque ou bras 68, 70, dont le chant supérieur présente deux encoches 72 de positionnement coopérant avec des organes d'accrochage 74 conjugués agencés sur les faces latérales opposées du boîtier 16 du disjoncteur 10. Ce dernier comporte également une paire de rebords 76 de préhension autorisant la mise en place du disjoncteur 10 sur les flasques mobiles 68, 70, lorsque les rails 60, 62 se trouvent en position d'extraction (figures 9 et 12).

Un mécanisme d'embrochage 78 (figures 2, 4, 6, 8 et 13) comporte un dispositif à crémaillère 80 coopérant avec une vis de commande 82 pouvant être actionnée à rotation par une manivelle 84 depuis la face avant du châssis 14. Le dispositif à crémaillère 80 entraîne des pignons 86 de transmission calés sur un arbre 88 rotatif s'étendant transversalement par rapport au mouvement de translation de la crémaillère 80. Aux extrémités opposées de l'arbre 88 transversal se trouvent deux cames 90, 92, de commande destinées à coopérer d'une part avec un dispositif d'entraînement 94 des connecteurs mobiles 48, 50, faisant partie du dispositif de connexion complémentaire 42 et d'autre part avec des moyens d'accouplement 96 fixés aux flasques 68, 70, mobiles de support du disjoncteur 10.

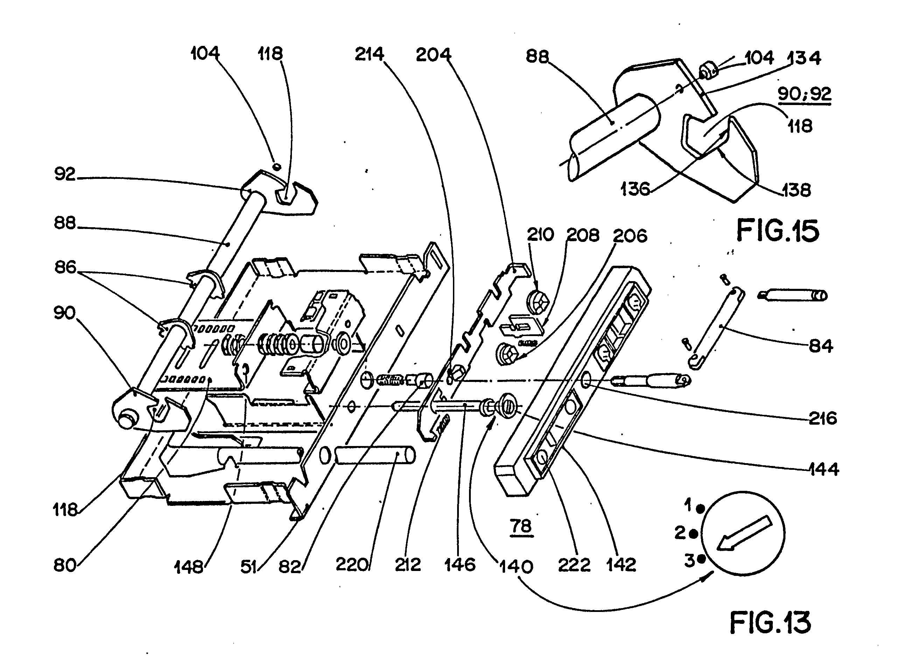

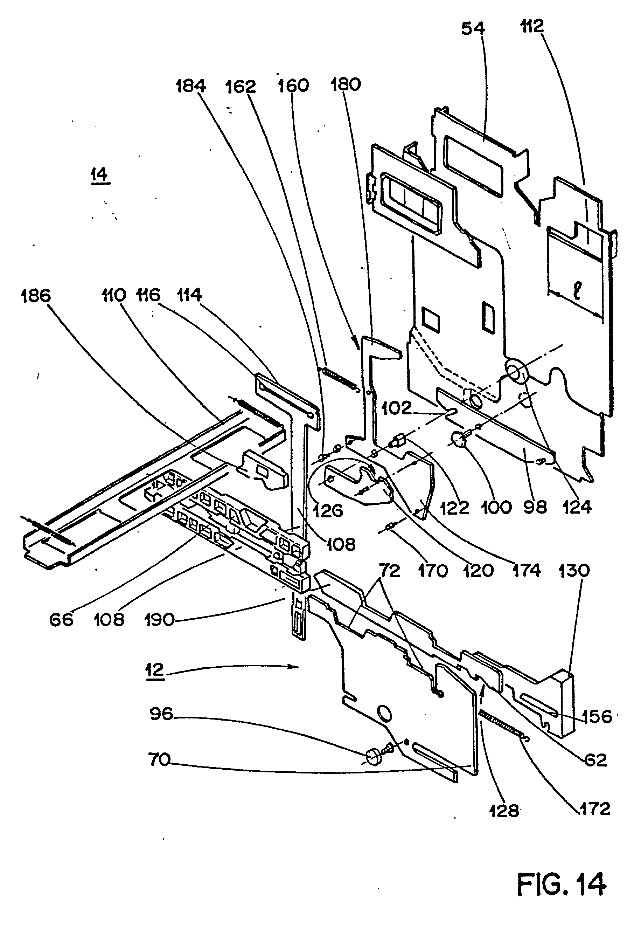

Le dispositif d'entraînement 94 des connecteurs mobiles 48, 50, est symétrique par rapport au plan médian du châssis 10 et comprend au niveau de chaque came 90, 92, un levier 98 intermédiaire monté à pivotement sur un axe 100 solidaire de la paroi latérale 52, 54, correspondante. L'une des extrémités du levier 98 est pourvue d'une rainure 102 dans laquelle peut s'engager un ergot 104 associé à chaque came 90, 92, (voir figures 13 et 14). A l'opposé de la rainure 102, chaque levier 98 est articulé en un point 106 à une tringle 108 verticale susceptible de se déplacer le long de la paroi latérale 52, 54, correspondante. Les connecteurs 48, 50, sont portés par une traverse 110 commune, reliée aux deux tringles 108 symétriques du dispositif d'entraînement 94. La traverse 110 s'étend parallèlement à l'arbre 88, et est animée d'un mouvement vertical de translation lors de l'enfichage ou de la déconnexion des connecteurs mâles 44, 46, et femelles 48, 50, du dispositif 42. Les extrémités opposées de la traverse 110 se déplacent dans une lumière 112 ménagée dans des parois latérales 52, 54, la hauteur h (figure 7) de chaque lumière 112 correspondant sensiblement à la course d'enfichage du dispositif de connexion 42 complémentaire. La partie supérieure de chaque tringle 108 présente une extension 114 munie d'une fente 116 dans laquelle est insérée à jeu l'arête correspondante de la traverse 110. La longueur de la fente 116 est supérieure à la profondeur de la traverse 110, et est sensiblement identique à la longueur 1 de la lumière 112 correspondant à la course longitudinale d'embrochage ou de débrochage du disjoncteur 10 (figure 14).

Le moyen d'accouplement 96 de chaque flasque 68, 70, mobile avec le mécanisme 78, est formé à titre d'exemple par un axe coiffé par un galet coopérant avec une encoche 118 de la came 90, 92, correspondante lors du déplacement de la crémaillère 80.

Un organe de verrouillage 120, monté à rotation limitée sur un axe 122 dans un palier 124 de chaque paroi latérale 52, 54, comporte un crantage 126 de retenue susceptible de s'engager dans un crantage 128 conjugué des rails 60, 62, lorsque le disjoncteur 10 se trouve en position embrochée (figures 11 et 14). Le disjoncteur est alors verrouillé positivement par les glissières 64, 66. Une poignée 130 (figure 14) d'extraction est accouplée à chaque rail 60, 62, pour assurer le déverrouillage de l'accrochage lors du retrait de l'appareil.

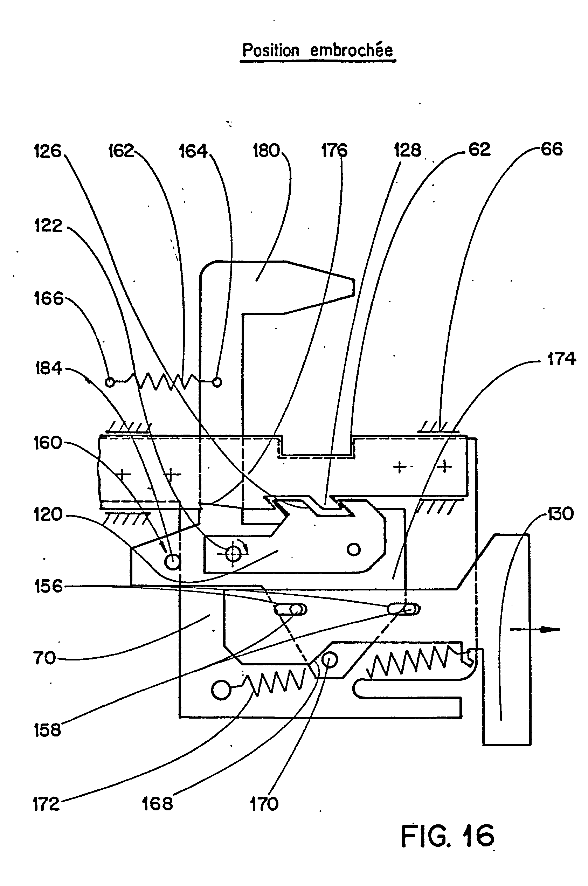

Sur la figure 15 est représentée en détail la structure d'une came 90, 92 de commande. L'encoche 118 est excentrée par rapport à l'axe transversal de l'arbre 88 rotatif. La came 90, 92, comporte une première arête 134 périphérique circulaire centrée sur l'axe de l'arbre 88, et coopérant par contact avec le galet d'accouplement 96 lorsque le mécanisme d'embrochage 78 est opérationnel entre la position débrochée et la position de test. La partie interne de l'encoche 118 est délimitée par une deuxième arête 136 rectiligne servant de butée au galet d'accouplement 96 en position de test. Une troisième arête 138 active de l'encoche 118 est susceptible d'entraîner le galet d'accouplement 96 de chaque flasque mobile 68, 70, de la position de test vers la position embrochée.

Les différentes phases de fontionnement du mécanisme d'embrochage 78 de l'appareillage électrique extractible sont illustrées sur les figures 1 à 9:

sur la figure 9 est représenté le montage du disjoncteur 10 sur les rails 60, 62, du châssis 14. Après le retrait maximum des flasques mobiles 68, 70, et des rails 60, 62, hors des glissières 64, 66 (sens de la flèche P),le disjoncteur est installé sur les rails 60, 62, après engagement des organes d'accrochage 74 dans les encoches 72 de positionnement. L'opérateur se sert des rebords 76 de préhension du boîtier 16 pour la mise en place du disjoncteur 10. La demi-vue de droite de la figure 7 montre l'installation du disjoncteur 10 sur les flasques mobiles 68, 70, en position d'extraction.

Le disjoncteur 10 peut ensuite être repoussé dans le sens de la flèche F à l'intérieur du châssis 14. La demi-vue de gauche de la figure 7 représente l'insertion des rails 60, 62, dans les glissières 64, 66, associées.

En position débrochée du disjoncteur 10 (figures 1 et 2), les bornes principales 28, 30, se trouvent séparées des pinces 38, 40, du socle de raccordement 32. Il en est de même des connecteurs fixes 44, 46, et mobiles 48, 50, du dispositif de connexion 42 complémentaire, la traverse 110 étant soulevée en position haute (figures 7 et 8) par la tringle 108 du dispositif d'entraînement 94. Le galet des moyens d'accouplement 96 des flasques mobiles 68, 70, se trouve en butée contre la première arête 134 de chaque came 90, 92, de commande. L'ergot 104 de transmission est inséré dans la rainure 102 de chaque levier 98 du dispositif 94.

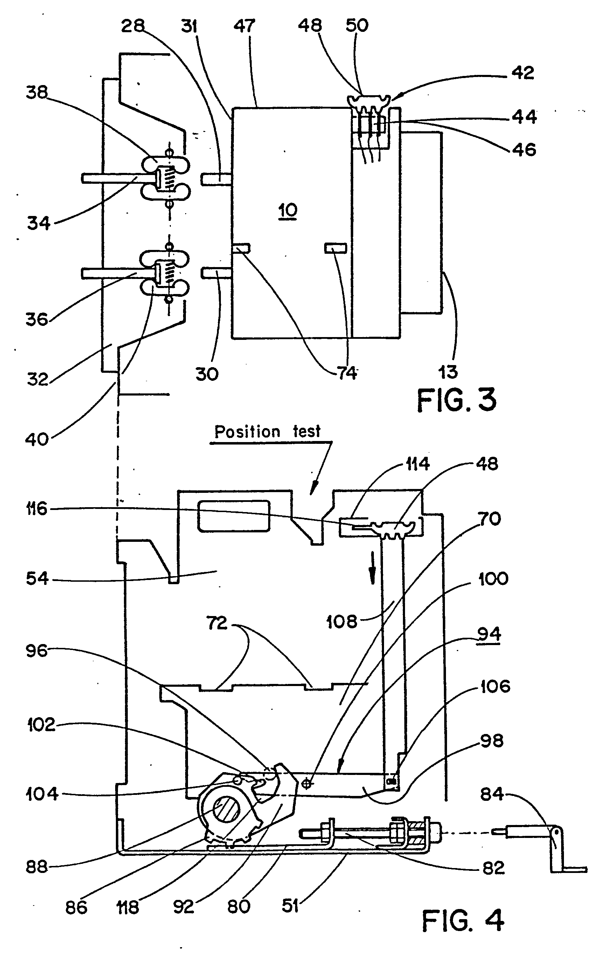

L'opération d'embrochage du disjoncteur 10 s'effectue en deux phases d'actionnement unidirectionnel de la manivelle 84, qui amène successivement le dispositif à crémaillère 80 dans une position intermédiaire de test (figures 3 et 4) puis dans une position finale embrochée (figures 5 et 6).

L'actionnement de la manivelle 84 jusqu'à la position de test (figures 3 et 4) provoque un mouvement initial de rotation de la vis de commande 82 dans le sens des aiguilles d'une montre, entraînant un déplacement longitudinal en translation du dispositif à crémaillère 80 vers la face avant 13. Il en résulte un mouvement de rotation dans le sens inverse des aiguilles d'une montre des cames 90, 92, et un mouvement de pivotement opposé des leviers 98 engendrant l'abaissement des tringles 108 du dispositif d'entraînement 94 de la traverse 110. Les connecteurs mobiles 48, 50, solidaires de la traverse 110 viennent s'enficher dans les connecteurs mâles 44, 46, correspondants du disjoncteur 10 durant cette première phase d'actionnement de la manivelle 84. La position du disjoncteur 10 n'a pas été modifiée et correspond à la position initiale des figures 1 et 2, étant donné que les flasques mobiles 68, 70, n'ont pas bougé en translation. La deuxième arête 136 rectiligne de l'encoche 118 disposée à l'intérieur de chaque came 90, 92, vient en contact avec le galet d'accouplement 96 qui reste également immobile jusqu'à la position de test.

A partir de la position de test, l'actionnement poursuivi de la manivelle 84 dans le sens des aiguilles d'une montre provoque un avancement maximum du dispositif à crémaillère 80 vers la face avant 13, et un mouvement de rotation des cames 90, 92, dans le sens trigonométrique. La troisième arête 138 de chaque came 90, 92, entraîne le galet des moyens d'accouplement 96, et les flasques mobiles 68, 70, déplacent le disjoncteur 10 en translation jusqu'à l'embrochage du circuit principal par insertion des bornes 28, 30, dans les pinces 38, 40, (figures 5 et 6). Durant cette deuxième phase d'actionnement en rotation de la manivelle 84 et de la vis 82, l'ergot 104 s'échappe de la rainure 102 ménagée dans chaque levier 98, et brise la liaison mécanique avec les tringles 108 du dispositif d'entraînement 94 qui demeure immobile. Les connecteurs fixes 44, 46, et mobiles 48, 50, restent en position connectée, mais sont entraînés en translation par le disjoncteur 10 vers la position embrochée, grâce au libre coulissement de la traverse 110 dans la fente 116 rectiligne des tringles 108.

Le mécanisme d'embrochage 78 permet à la fois de déplacer le disjoncteur 10 entre les positions embrochée ou débrochée, et d'actionner le dispositif d'entraînement 94 des connecteurs mobiles 48, 50.

Le disjoncteur 10 occupe deux positions distinctes échelonnées le long de la direction longitudinale d'embrochage: une première position embrochée (figure 5) et une deuxième position débrochée avec ou sans test (figures 3 et 1). Le disjoncteur 10 reste immobile dans la deuxième position lorsque les connecteurs mobiles 48, 50, rentrent ou sortent des connecteurs fixes 44, 46, correspondants. Dans la première position embrochée (figure 5) et la deuxième position débrochée avec test (figure 3), le dispositif de connexion complémentaire 42 est actif, et autorise les prises d'informations et l'émission d'ordres vers les auxiliaires électriques 19 et le déclencheur électronique 17 du disjoncteur 10.

Le débrochage du disjoncteur 10 à partir de la première position embrochée (figure 5) vers la deuxième position débrochée sans test (figure 1) s'opère en sens inverse de l'embrochage, en tournant la manivelle 84 dans le sens inverse des aiguilles d'une montre. Dans la première phase de débrochage, le disjoncteur 10 est entraîné par les cames 90, 92, vers la position débrochée avec test, dans laquelle les connecteurs mobiles 48, 50, du dispositif de connexion 42 restent enfichés dans les connecteurs fixes 44, 46. La rotation poursuivie de la manivelle 84 pendant la deuxième phase de débrochage provoque la déconnexion des connecteurs (44 à 50) sans mouvement du disjoncteur 10.

Le déplacement réversible en translation verticale de la traverse 110 de support des connecteurs mobiles 48, 50, s'exerce soit au début de la course d'embrochage, soit à la fin de la course de débrochage du mécanisme 78, et s'étend perpendiculairement à la direction longitudinale des rails 60, 62 du châssis 14. Dans l'exemple décrit, l'enfichage et la déconnexion du dispositif de connexion 42 s'opèrent sur la paroi supérieure 47 du boîtier 16, mais il est évident que le dispositif de connexion 42 pourrait être agencé sur la partie inférieure opposée.

Un indicateur de position 140 (figure 13) rotatif est situé en face avant sur un plastron 142 fixe pour signaler les différents états des circuits principaux et auxiliaires du disjoncteur 10:

position 1 "embroché" correspond à la figure 5 dans laquelle les circuits principaux et auxiliaires sont connectés,

position 2 "test" ou d'essai correspond à la figure 3 dans laquelle les circuits principaux sont déconnectés et les circuits auxiliaires sont connectés. Le disjoncteur 10 peut alors être manoeuvré normalement et permet la vérification de toutes les séquences de fonctionnement,

position 3 "débroché" correspond à la figure 1 dans laquelle les circuits principaux et auxiliaires sont déconnectés.

L'indicateur 140 rotatif comporte un voyant 144 frontal prolongé par une tige 146 ayant un filetage hélicoïdal coopérant avec un écrou 148 solidaire du dispositif à crémaillère 80. Lors de l'actionnement de la vis de commande 82 par la manivelle 84, le mouvement de translation du dispositif à crémaillère 80 est transformé en un mouvement de rotation de la tige 146 de l'indicateur 140.

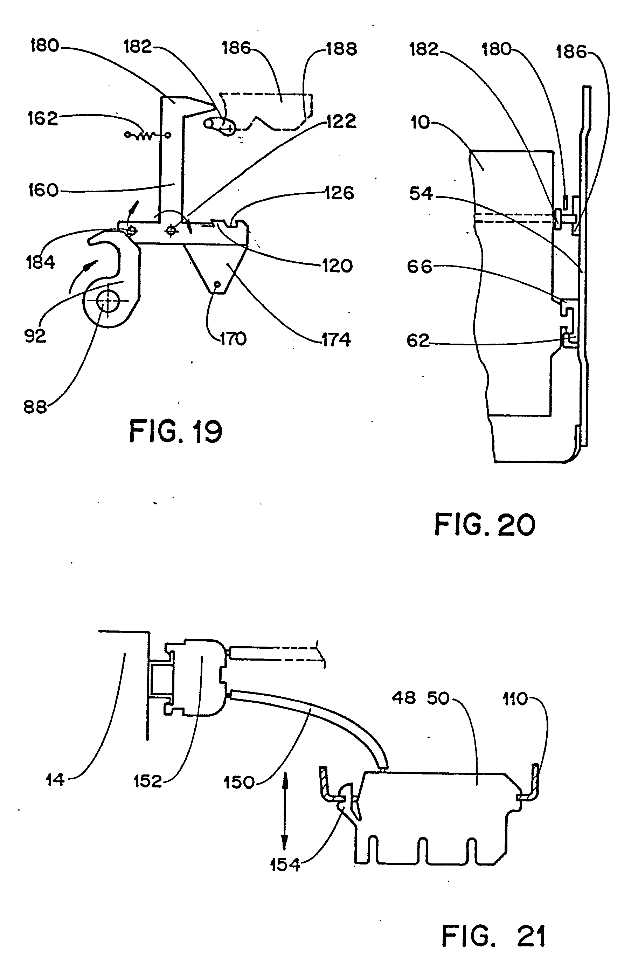

Les connecteurs mobiles 48, 50, du dispositif de connexion 42 sont reliés par des fils de liaison 150 à un bornier de raccordement 152, fixé sur un rail du châssis 14 et accessible à l'utilisateur (figures 21 et 9). Chaque connecteur 48, 50, est logé dans un boîtier isolant clipsé sur la traverse 110 au moyen d'une patte élastique 154 de maintien.

Chaque poignée d'extraction 130 comporte deux ouvertures 156 oblongues susceptibles de coulisser longitudinalement sur deux taquets 158 du flasque mobile 68, 70, correspondant (figures 14, 16, 17). L'organe de verrouillage 120 à crantage 126 est solidarisé par rivetage à un levier de commande 160 monté à pivotement sur le même axe 122. Un ressort de rappel 162 est ancré entre un point 164 du levier de commande 160 et un point fixe 166 du châssis 14, et sollicite l'ensemble levier 160 et organe de verrouillage 120 dans le sens trigonométrique vers la position active, autorisant l'engagement automatique du crantage 126 de retenue dans le crantage 128 conjugué du rail 60, 62, lorsque le disjoncteur 10 arrive en position embrochée (figure 16). Chaque poignée d'extraction 130 est équipée d'autre part d'une rampe 168 de déverrouillage susceptible de coopérer avec un taquet 170 du levier de commande 160 lorsque l'utilisateur exerce une traction sur la poignée 130 à l'encontre d'un ressort de rappel 172. L'actionnement en translation de la poignée 130 provoque un mouvement de pivotement du levier de commande 160, et l'écartement des crantages 126, 128, vers une position déverrouillée, autorisant le retrait du disjoncteur 10 vers la position d'extraction. Le taquet 170 est disposé sur un bras inférieur 174 du levier 160.

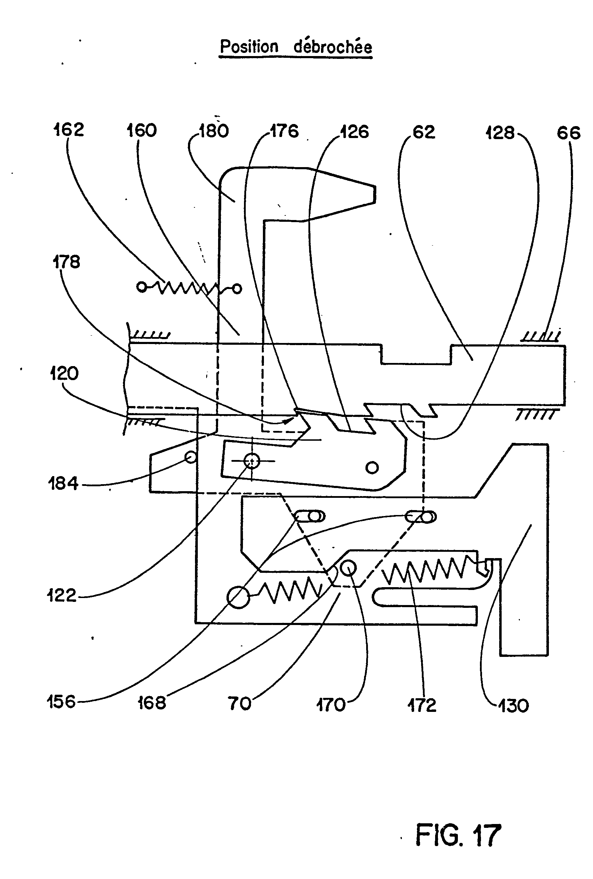

En plus du crantage 128 principal, chaque rail 60, 62, comporte une saignée 176 auxiliaire décalée longitudinalement (figure 17) et coopérant par encliquetage avec la première dent du crantage 126 de l'organe de verrouillage 120, lorsque le disjoncteur 10 se trouve en position débrochée. Il en résulte un accrochage 178 supplémentaire unidirectionnel qui doit être obligatoirement libéré par la poignée 130 pour autoriser l'extraction du disjoncteur 10 hors du châssis 14.

En référence aux figures 19 et 20, le bras supérieur 180 du levier de commande 160 est susceptible d'actionner la barre de déclenchement 182 du disjoncteur 10 vers la position déclenchée au cours du pivotement du levier 160 dans le sens des aiguilles d'une montre. Cette action mécanique du levier 160 provoque un premier déclenchement forcé du dispositif de commande 18 lorsque le mécanisme 78 à manivelle 84 assure le déplacement du disjoncteur 10 de la position embrochée vers la position débrochée. Le pivotement du levier de commande 160 intervient au cours du mouvement de rotation de la came 92 dont le chant supérieur interfère avec un axe 184 d'entraînement du levier 160.

Une butée de sécurité 186 (figures 14, 19, 20) est solidarisée à la paroi 54 latérale du châssis 14, et comporte une face 188 active oblique destinée à faire pivoter la barre de déclenchement 182 vers la position déclenchée lors de l'insertion du disjoncteur 10 dans le châssis 14. Il en résulte un deuxième déclenchement forcé dans le sens de l'embrochage, lorsque le disjoncteur 10 fermé est déplacé en translation par le mécanisme 78 de la position débrochée vers la position embrochée.

Selon une variante, le levier de commande 160 et l'organe de verrouillage 120 peuvent être réalisés d'une manière équivalente au moyen d'une pièce unique articulée sur l'axe 122. Cette pièce, associée au ressort de rappel 162 possède une première fonction d'accrochage mécanique du disjoncteur 10 en position débrochée et en position embrochée, une deuxième fonction de déverrouillage des crantages 126, 128, par action de la poignée d'extraction 130 ou de la came 90, 92 de l'arbre 88, et une troisième fonction de déclenchement forcé du disjoncteur 10 dans le sens du débrochage.

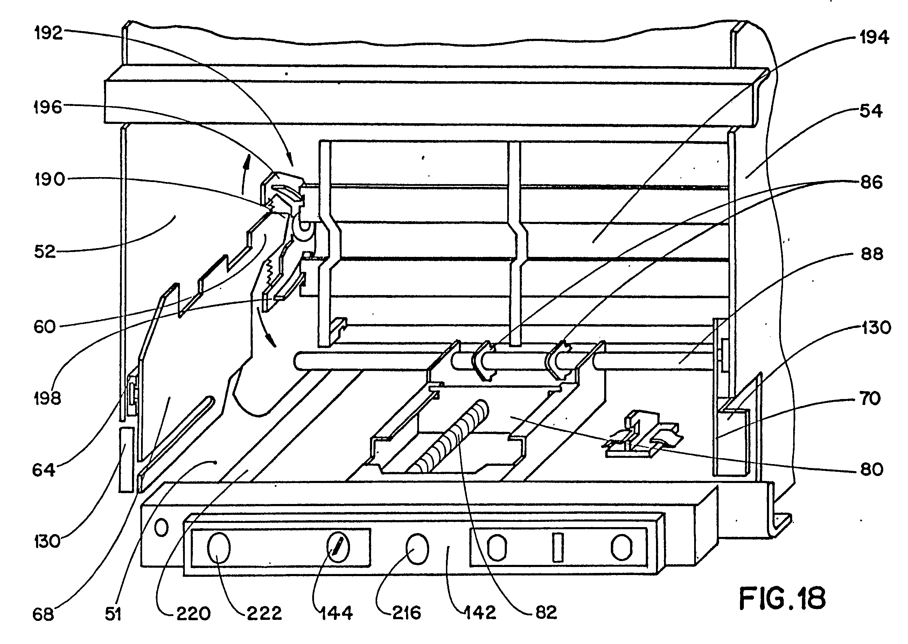

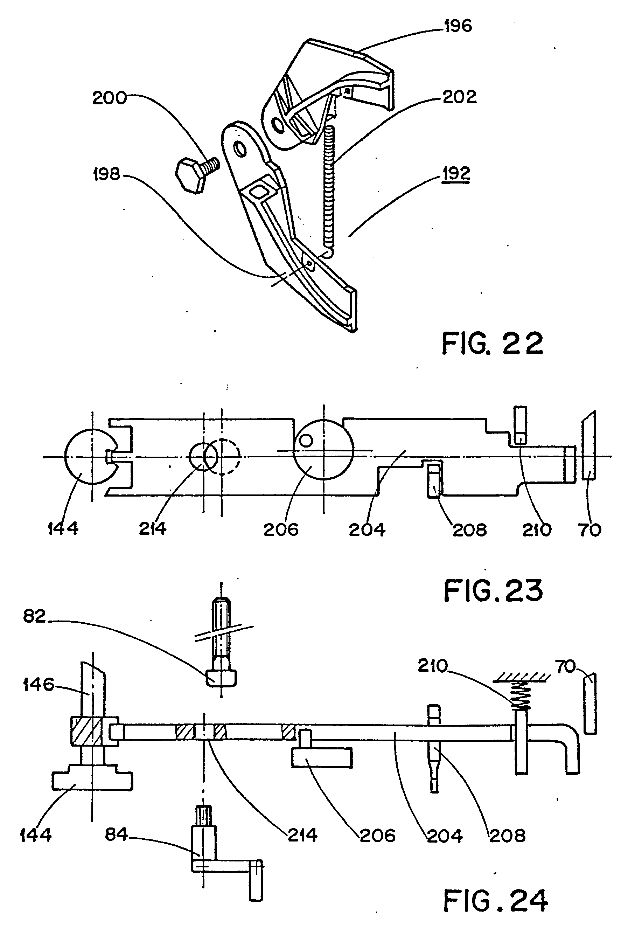

En référence à la figure 18, l'extrémité postérieure 190 de chaque rail 60, 62, est taillée en biseau et coopère avec un dispositif d'actionnement 192 des volets d'isolement 194. En position débrochée du disjoncteur 10, la fermeture des volets 194 assure l' isolement et empêche tout contact avec les plages 34, 36, du socle de raccordement 32. La moitié du dispositif d'actionnement 192 est montrée en détail à la figure 22 et comporte une paire de joues 196, 198, de commande articulées sur un axe 200 porté par la paroi 52 latérale du châssis 14. Un ressort de rappel 202 sollicite un rapprochement des deux joues 196, 198, et la fermeture des volets d'isolement 194 dans le sens du débrochage du disjoncteur 10. L'autre moitié symétrique du dispositif d'actionnement 192 est associée à la paroi latérale 54 du châssis 14. Lorsque le disjoncteur 10 est actionné par le mécanisme d'embrochage 74 de la position débrochée avec test vers la position embrochée, l'extrémité 190 en biseau de chaque rail 60, 62, agit sur les rampes des joues de commande 196, 198 (voir figures 16, 18), et provoque leur écartement suivi de l'ouverture automatique des volets d'isolement 194, de manière à autoriser l'embrochage.

En référence aux figures 13, 18, 23 et 24, une pluralité d'organes auxiliaires de sécurité, sont agencés dans le plastron 142 antérieur du châssis 14 pour contrôler le fonctionnement du mécanisme d'embrochage 74. Ces organes auxiliaires comportent un verrou principal 204 coopérant avec un premier verrouillage par serrure 206, un deuxième verrouillage par cadenas 208, et un troisième verrouillage 210 par ouverture de la porte 58. Le verrou principal 204 est formé par une bride de blocage associée à un ressort de rappel 212. La bride comprend plusieurs encoches de retenue et peut être déplacée transversalement entre une première position de blocage et une deuxième position de déblocage. La bride du verrou 204 comporte d'autre part un orifice 214 de passage de la manivelle 84. Dans la deuxième position de déblocage du verrou 204 (représentée sur la figure 13), l'orifice 214 se trouve dans l'alignement longitudinal avec la vis de commande 82 et l'orifice 216 du plastron 142, autorisant le passage de la manivelle 84. Lorsque le verrou 204 est retenu dans la première position de blocage par engagement de l'un quelconque des trois organes de verrouillage, 206, 208, 210, dans les encoches correspondantes de la bride, les orifices 214 et 216 ne sont plus alignés (voir figures 23 et 24), de manière à interdire la mise en place de la manivelle 84. Le mécanisme d'embrochage 74 ne peut pas être actionné.

Lorsque le disjoncteur 10 est insuffisamment poussé à l'intérieur du châssis 14 de la position d'extraction vers la position débrochée, le flasque mobile 70 de support du disjoncteur interfère avec le verrou 204, et empêche également la mise en place de la manivelle 84.

A la plaque de base 51 du châssis 14 est fixé à demeure un fourreau 220 pour le rangement de la manivelle 84, laquelle est articulée en trois éléments (voir figure 13). Le fourreau 220 s'étend parallèlement à la vis de commande 82, et est aligné avec un orifice 222 d'accès, ménagé dans le plastron 142. Le rangement de la manivelle 84 dans le fourreau 220 fixe s'effectue depuis la face avant du châssis 14 lorsque la porte 58 est ouverte ou fermée.

## Revendications

1. Mécanisme réversible d'embrochage et de débrochage pour un disjoncteur (10) électrique extractible et multipolaire, équipé de circuits principaux à bornes (28, 30) et de circuits auxiliaires associés à un dispositif de connexion (42) ayant des connecteurs fixes (44, 46) et des connecteurs conjugués mobiles (48, 50), le disjoncteur étant monté sur un support mécanique (12) mobile à l'intérieur d'un châssis (14) fixe en forme de caisson ayant une ouverture frontale (56), deux parois latérales (52, 54) opposées, et un socle postérieur (32) fixe de raccordement des bornes principales (28, 30) de chaque pôle, le support mécanique (12) du disjoncteur (10) étant guidé au moyen d'une paire de glissières (64, 66) fixées symétriquement aux parois latérales (52, 54) du châssis (14), et s'étendant parallèlement selon la direction longitudinale d'embrochage, ledit mécanisme (78) comprenant un dispositif de manoeuvre (82, 84), associé à une chaîne cinématique de transmission de mouvement susceptible d'occuper une première position "embrochée" dans laquelle les circuits principaux et auxiliaires du disjoncteur (10) sont connectés, une deuxième position de "test" ou d'essai dans laquelle les circuits principaux sont déconnectés, et les circuits auxiliaires sont connectés, et une troisième position "débrochée" dans laquelle les circuits principaux et auxiliaires sont déconnectés, caractérisé en ce que les connecteurs fixes (44, 46) du dispositif de connexion (42) des circuits auxiliaires sont solidaires du disjoncteur (10) et que la chaîne cinématique de transmission de mouvement du mécanisme (78) réversible comporte une première liaison mécanique entre le dispositif de manoeuvre (82, 84) et un dispositif d'entraînement (94) des connecteurs mobiles (48, 50) du dispositif de connexion (42) durant la phase d'actionnement correspondant à l'intervalle situé entre les deuxième et troisième positions, et une deuxième liaison mécanique entre le dispositif de manoeuvre (82, 84) et un organe d'accouplement (96) du support mécanique (12) mobile du disjoncteur (10) durant une autre phase d'actionnement correspondant à l'intervalle ménagé entre les deuxième et première positions, l'ensemble étant agencé pour que la première liaison mécanique soit active lors de la rupture de la deuxième liaison mécanique, et inversement, autorisant la déconnexion ou l'enfichage des connecteurs fixes (44, 46) et mobiles (48, 50) des circuits auxiliaires lorsque le disjoncteur (10) reste immobile.

2. Mécanisme réversible d'embrochage et de débrochage selon la revendication 1, caractérisé en ce que:

les faces latérales verticales et opposées du boîtier (16) isolant renfermant le disjoncteur (10) comportent des organes d'accrochage ((74) positionnés sur le support mécanique (12),

les connecteurs fixes (44, 46) du dispositif de connexion (42) se trouvent sur l'une des faces horizontales supérieure (47) ou inférieure du boîtier (16),

le support mécanique (12) mobile du disjoncteur (10) est équipé d'une paire de rails (60, 62) susceptibles de coulisser dans les glissières (64, 66) correspondantes du châssis (14),

l'organe d'accouplement (96) de la deuxième liaison mécanique est disposé sur un flasque (68, 70) fixé à chaque rail (60, 62).

3. Mécanisme réversible d'embrochage et de débrochage selon la revendication 1, caractérisé en ce que le dispositif d'entraînement (94) est agencé pour engendrer un déplacement en translation verticale des connecteurs mobiles (48, 50) lors de l'établissement de la première liaison mécanique et de la rupture de la deuxième liaison mécanique, ledit déplacement étant perpendiculaire à la direction longitudinale d'embrochage ou de débrochage des circuits principaux du disjoncteur (10), et que les connecteurs mobiles (48, 50) du dispositif de connexion (42) sont portés par une traverse (110) accouplée à deux tringles (108) symétriques du dispositif d'entraînement (94), et s,étendant parallèlement à la face horizontale du boîtier (16) sur laquelle se trouvent les connecteurs fixes (44, 46)) correspondants.

4. Mécanisme réversible d'embrochage et de débrochage selon la revendication 1, caractérisé en ce que le dispositif de manoeuvre du mécanisme (78) réversible comporte:

une vis (82) de commande associée à un dispositif à crémaillère (80) coopérant avec un pignon de transmission (86) calé sur un arbre (88) rotatif,

et au moins une came (90, 92) fixée sur ledit arbre (88) pour piloter alternativement le dispositif d'entraînement (94) des connecteurs mobiles (48, 50), et l'organe d'accouplement (96) du support mécanique (12), ladite came (90, 92) rotative ayant un ergot (104) susceptibles de s'engager dans une rainure (102) ménagée dans un levier (98) intermédiaire du dispositif d'entraînement (94) lors de l'établissement de la première liaison mécanique, et une encoche (118) destinée à entraîner l'organe d'accouplement (96) du support mécanique (12) lors de l'établissement de la deuxième liaison mécanique.

5. Mécanisme réversible d'embrochage et de débrochage selon la revendication 4, caractérisé en ce que le levier (98) intermédiaire du dispositif d'entraînement (94) est monté à pivotement sur un axe (100) solidaire de la paroi latérale (52, 54) correspondante du châssis (14), ladite rainure (102) étant agencée à l'une de ses extrémités, tandis que l'autre extrémité est articulée à la tringle (108) verticale en liaison avec la traverse (110), insérée à jeu dans une fente (116) longitudinale ménagée dans une extension (114) de chaque tringle (108), la fente (116) ayant une longueur correspondant à la course d'embrochage ou de débrochage du disjoncteur (10) lors de l'établissement de la deuxième liaison mécanique.

6. Mécanisme réversible d'embrochage et de débrochage selon la revendication 1, caractérisé en ce que le dispositif de connexion (42) comporte un premier connecteur fixe (46) en liaison avec un déclencheur électronique (17) du disjoncteur, et un deuxième connecteur fixe (44) relié à des auxiliaires électriques de mesure, de contrôle et de signalisation.

7. Mécanisme d'embrochage et de débrochage pour un disjoncteur (10) électrique extractible, équipé de circuits principaux à bornes (28, 30) et de circuits auxiliaires associés à un dispositif de connexion (42), susceptibles d'occuper une première position "embrochée" dans laquelle les circuits principaux et auxiliaires du disjoncteur (10) sont connectés, une deuxième position de "test" ou d'essai dans laquelle les circuits principaux sont déconnectés, et les circuits auxiliaires sont connectés, et une troisième position "débrochée" dans laquelle les circuits principaux et auxiliaires sont déconnectés, le disjoncteur étant monté sur un support mécanique (12) mobile à l'intérieur d'un châssis fixe (14) en forme de caisson ayant une ouverture frontale (56), deux parois latérales (52, 54) opposées, et un socle postérieur (32) fixe de raccordement des bornes principales (28, 30) de chaque pôle, ledit mécanisme coopérant avec des moyens de verrouillage du disjoncteur (10) en positions débrochée et embrochée, caractérisé en ce que le support mécanique (12) mobile du disjoncteur (10) comporte:

une paire de rails (60, 62) symétriques montés à coulissement longitudinal dans des glissières (64, 66) correspondantes fixées aux parois latérales (52, 54) opposées du châssis (14), le disjoncteur (10) ayant au moins un organe d'accrochage (74) positionné dans un organe conjugué 72 de chaque rail (60, 62),

un système de blocage équipé d'un organe de verrouillage (120) coopérant avec des moyens de retenue (128, 176) des rails (60, 62) pour assurer le blocage mécanique du disjoncteur (10) dans les glissières (64, 66) en positions embrochée et débrochée, ledit organe de verrouillage (120) étant solidaire d'un levier de commande (160) monté à pivotement sur un axe (122) du châssis (14),

une première liaison mécanique, (168, 170) entre ledit de levier de commande (160) et une poignée d'extraction (130), susceptible de provoquer le décrochage du système de blocage par désencliquetage de l'organe de verrouillage (120) et des moyens de retenue (128, 176),

et une deuxième liaison mécanique agencée entre la chaîne cinématique du dispositif de manoeuvre (84, 82) et ledit levier de commande (160) pour assurer le déclenchement forcé du disjoncteur (10) lorsque le support mécanique (12) est déplacé de la position embrochée vers la position débrochée.

8. Mécanisme d'embrochage et de débrochage selon la revendication 7, caractérisé en ce que le levier de commande (160) est associé à un ressort de rappel (162) sollicitant ledit organe de verrouillage (120) dans le sens du blocage, et que les moyens de retenue des rails (60, 62) comportent un crantage (128) principal et une saignée (176) auxiliaire décalés longitudinalement l'un de l'autre pour former respectivement un premier verrouillage positif bidirectionnel du support mobile (12) lorsque le disjoncteur (10) arrive en position embrochée, et un deuxième accrochage (178) unidirectionnel dudit support en position débrochée empêchant l'extraction du disjoncteur (10), mais autorisant l'embrochage, le levier de commande (160) comprenant un taquet (170) coopérant avec une rampe (168) de la poignée d'extraction (130) lors de l'établissement de la première liaison mécanique, et un axe (184) susceptible d'être entraîné par une came (90, 92) du dispositif de manoeuvre (84, 82) lors de l'établissement de la deuxième liaison mécanique.

9. Mécanisme d'embrochage et de débrochage selon la revendication 8, caractérisé en ce que chaque rail (60, 62) du support mécanique (12) comporte un flasque (68, 70) sur lequel est montée à translation la poignée d'extraction (130), et ayant un organe d'accouplement (96) susceptible de coopérer avec ladite came (90, 92) du dispositif de manoeuvre (84, 82), l'extrémité postérieure de chaque rail (60, 62) étant taillée en biseau pour coopèrer avec un dispositif d'actionnement (192) d'un système de volets d'isolement (194), ledit dispositif comprenant une paire de joues de commande (196, 198) articulées sur un axe (200) porté par une paroi (52, 54) latérale du châssis (14).

10. Mécanisme d'embrochage et de débrochage selon la revendication 7, ayant une pluralité d'organes auxiliaires de sécurité agencés dans un plastron (142) antérieur du châssis (14), et comprenant:

un verrou (204) comportant une bride mobile ayant des encoches de retenue, susceptibles de coopérer par encliquetage avec lesdits organes auxiliaires dans une première position de blocage, de manière à interdire l'actionnement du dispositif de manoeuvre (84, 82),

un premier orifice (216) de passage d'une manivelle (84) d'actionnement du dispositif de manoeuvre à crémaillère (80) et à vis de commande ledit verrou (204) étant doté d'un deuxième orifice (214) pouvant être aligné avec le premier orifice (216) conjugué du plastron (142) pour autoriser l'actionnement de la vis de commande (82) par la manivelle (84) dans une deuxième position de déblocage de la bride,

un fourreau (220) fixe aligné longitudinalement avec un troisième orifice (222) du plastron (142) pour permettre le rangement de la manivelle (84) articulée en plusieurs éléments,

l'un des flasques (68, 70) du support mécanique (12) interférant avec le verrou (204) en interdisant l'actionnement de la manivelle (84) lorsque le disjoncteur (10) est insuffisamment poussé à l'intérieur du châssis (14) à partir de la position d'extraction vers la position débrochée.

**Patentansprüche**

1. Einschiebbarer und ausziehbarer Umkehrmechanismus für einen ausfahrbaren und mehrpoligen elektrischen Leistungsschalter (10), ausgestattet mit Hauptstromkreisen mit Klemmen (28, 30) und mit Hilfsstromkreisen, die mit einer Verbindungsvorrichtung (42) gekuppelt sind, welche feste Kontaktstücke (44, 46) und zugeordnete bewegliche Kontaktstücke (48, 50) aufweist, wobei der Leistungsschalter auf einen beweglichen mechanischen Träger (12) montiert ist im Innern eines starren kastenförmigen Gestells (14) mit einer Voröffnung (56), zwei gegenüberliegenden Seitenwänden (52, 54) und einem hinteren starren Sockel (32) zum Verbinden der Hauptklemmen (28, 30) jedes Pols, wobei der mechanische Träger (12) des Leistungsschalters (10) durch ein paar Gleitschienen (64, 66) geführt wird, die symmetrisch mit den Seitenwänden (52, 54) des Gestells (14) verbunden sind und sich parallel gemäss der Einschieb-Längsrichtung erstrecken, wobei der genannte Mechanismus (78) eine Betätigungsvorrichtung (82, 84) aufweist, die mit einer kinematischen Bewegungsübertragung verbunden ist, die eine erste "eingeschobene" Stellung einnehmen kann, in der die Haupt- und Hilfsstromkreise des Leistungsschalters (10) verbunden sind, eine zweite "Test-" oder Versuchsstellung, in der die Hauptstromkreise getrennt und die Hilfsstromkreise verbunden sind, und eine dritte "ausgezogene" Stellung, in der die Haupt- und Hilfsstromkreise getrennt sind, dadurch gekennzeichnet, dass die festen Kontaktstücke (44, 46) der Verbindungsvorrichtung (42) der Hilfsstromkreise mit dem Leistungsschalter (10) verbunden sind, und dass die kinematische Bewegungsübertragung des Umkehrmechanismus (78) eine erste mechanische Verbindung aufweist zwischen der Betätigungsvorrichtung (82, 84) und einer Antriebsvorrichtung (94) der beweglichen Kontaktstücke (48, 50) der Verbindungsvorrichtung (42) während der Betätigungsphase, die dem Intervall zwischen der zweiten und der dritten Stellung entspricht, und eine zweite mechanische Verbindung aufweist zwischen der Betätigungsvorrichtung (84, 84) und einem Kupplungsglied (96) des beweglichen, mechanischen Trägers (12) des Leistungsschalters während einer anderen Betätigungsphase, die dem Intervall zwischen der zweiten und ersten Stellung entspricht, wobei das Ganze so angeordnet ist, dass die erste mechanische Verbindung bei Unterbrechung der zweiten mechanischen Verbindung aktiv ist, und umgekehrt, das Abschalten oder Einstecken der festen (44, 46) und beweglichen (48, 50) Kontaktstücke der Hilfsstromkreise ermöglicht wird, wenn der Leistungsschalter (10) unbeweglich bleibt.

2. Einschiebbarer und ausziehbarer Umkehrmechanismus gemäss Anspruch 1, dadurch gekennzeichnet, dass:

die senkrechten und gegenüberliegenden Seitenflächen des den Leistungsschalter (10) einschliessenden Isoliergehäuses (16) Sperrglieder (74) aufweisen, die auf dem mechanischen Träger (12) angeordnet sind,

sich die festen Kontaktstücke (44, 46) der Verbindungsvorrichtung (42) auf einer der waagerechten oberen (47) oder unteren Seiten des Gehäuses (16) befinden,

der bewegliche mechanische Träger (12) des Leistungsschalters (10) mit einem Schienenpaar (50, 62) versehen ist, die in den entsprechenden Gleitschienen (64, 66) des Gestells (14) gleiten können,

das Kupplungsglied (96) der zweiten mechanischen Verbindung auf einem mit jeder Schiene (60, 62) befestigten Flansch (68, 70) angeordnet ist.

3. Einschiebbarer und ausziehbarer Umkehrmechanismus gemäss Anspruch 1, dadurch gekennzeichnet, dass die Antriebsvorrichtung (94) so ausgeführt ist, um eine senkrechte Verschiebung der beweglichen Kontaktstücke (48, 50) zu bewirken bei Herstellung der ersten mechanischen Verbindung und Unterbrechung der zweiten mechanischen Verbindung, wobei die genannte Verschiebung senkrecht zu der Einschub- oder Auszieh-Längsrichtung der Hauptstromkreise des Leistungsschalters (10) erfolgt, und dass die beweglichen Kontaktstücke (48, 50) der Verbindungsvorrichtung (42) von einem Querträger (110) getragen werden, der mit zwei symmetrischen Stangen (108) der Antriebsvorrichtung (94) verbunden ist, und sich parallel zur waagerechten Seite des Gehäuses (16) erstreckt, auf welcher sich die entsprechenden festen Kontaktstücke (44, 46) befinden.

4. Einschiebbarer und ausziehbarer Umkehrmechanismus gemäss Anspruch 1, dadurch gekennzeichnet, dass die Betätigungsvorrichtung des Umkehrmechanismus (78) aufweist:

eine Steuerschraube (82), die mit einer Zahnradvorrichtung (80) verbunden ist, die mit einem Uebersetzungsrad (86) zusammenarbeitet, das auf eine Drehwelle (88) gekeilt ist,

und wenigstens einen Nocken (90, 92), der auf der genannten Welle (88) befestigt ist, um abwechselnd die Antriebsvorrichtung (94) der beweglichen Kontaktstücke (48, 50) und das Kupplungsglied (96) des mechanischen Trägers (12) zu steuern, wobei die genannte Drehwelle (90, 92) einen Haken (104) aufweist, der in eine Rille (102) eingreifen kann, die in einem Hebel (98) der Antriebsvorrichtung (94) vorgesehen ist, bei Herstellung der ersten mechanischen Verbindung, und einen Schlitz (118) aufweist, um das Kupplungsglied (96) des mechanischen Trägers (12) bei Herstellung der zweiten mechanischen Verbindung anzutreiben.

5. Einschiebbarer und ausziehbarer Umkehrmechanismus gemäss Anspruch 4, dadurch gekennzeichnet, dass der Hebel (98) der Antriebsvorrichtung (94) schwenkbar auf einer Achse (100) gelagert ist, die mit der entsprechenden Seitenwand (52, 54) des Gestells (14) verbunden ist, wobei die genannte Rille (102) an einem der Hebelenden angeordnet ist, während das andere Ende mit der senkrechten Stange (108) gelenkig verbunden ist in Verbindung mit dem Querträger (11) und mit Spiel in einem in dem Fortsatz (114) jeder Stange (108) vorgesehenen länglichen Schlitz (116) eingefügt ist, wobei der Schlitz (116) eine Länge aufweist, die der Einschub- oder Ausziehstrecke des Leistungsschalters (10) bei Herstellung der zweiten mechanischen Verbindung entspricht.

6. Einschiebbarer und ausziehbarer Umkehrmechanismus gemäss Anspruch 1, dadurch gekennzeichnet, dass die Verbindungsvorrichtung (42) ein erstes festes Kontaktstück (46) aufweist in Verbindung mit dem elektronischen Auslöser (17) des Leistungsschalters, und ein zweites festes Kontaktstück (44), das mit elektrischen Mess-, Kontroll- und Signal-Hilfsstromkreisen verbunden ist.

7. Einschiebbarer und ausziehbarer Mechanismus für einen ausfahrbaren elektrischen Leistungsschalter (10), ausgestattet mit Hauptstromkreisen mit Klemmen (28, 30) und mit Hilfsstromkreisen, die mit einer Verbindungsvorrichtung (42) gekuppelt sind, die eine erste "eingeschobene" Stellung einnehmen kann, in der die Haupt- und Hilfsstromkreise des Leistungsschalters (10) verbunden sind, eine zweite "Test-" oder Versuchsstellung, in der die Hauptstromkreise getrennt und die Hilfsstromkreise verbunden sind, und eine dritte "ausgezogene" Stellung, in der die Haupt- und Hilfsstromkreise getrennt sind, wobei der Leistungsschalter auf einen beweglichen mechanischen Träger (12) montiert ist im Innern eines starren kastenförmigen Gestells (14) mit einer Vorderöffnung (56), zwei gegenüberliegenden Seitenwänden (52, 54) und einem hinteren starren Sockel (32) zum Verbinden der Hauptklemmen (28, 30) jedes Pols, wobei der genannte Mechanismus in eingeschobener und ausgezogener Stellung des Leistungsschalters (10) mit Verriegelungsmitteln zusammenarbeitet, dadurch gekennzeichnet, dass der bewegliche mechanische Träger (12) des Leistungsschalters (10) aufweist:

ein Paar symmetrische Schienen (60, 62), die in Längsrichtung gleitend in entsprechenden Gleitschienen (64, 66) angebracht sind, die mit den gegenüberliegenden Seitenwänden (52, 54) des Gestells (14) verbunden sind, wobei der Leistungsschalter (10) wenigstens ein Sperrglied (74) aufweist, das in dem zugeordneten Element (72) jeder Schiene (50, 62) angeordnet ist,

ein Verriegelungssystem, das mit einem Verriegelungsglied (120) versehen ist, das mit Zurückhaltmitteln (128, 176) der Schienen (60, 62) zusammenarbeitet, um die mechanische Verriegelung des Leistungsschalters (10) in den Gleitschienen (64, 66) in der eingeschobenen und in der ausgezogenen Stellung zu gewährleisten, wobei das genannte Verriegelungsglied (120) mit einem Steuerhebel (160) verbunden ist, der schwenkbar auf einer Achse (122) des Gestells (14) angebracht ist,

eine erste mechanische Verbindung (168, 170) zwischen dem genannten Steuerhebel (160) und einem Ausziehgriff (130), der das Aushaken des Verriegelungssystems durch Ausklinken des Verriegelungsgliedes (120) und der Zurückhaltmittel (128, 176) bewirken kann,

und eine zweite mechani sche Verbindung, die zwischen der kinematischen Uebertragung der Betätigungsvorrichtung (84, 82) und dem genannten Steuerhebel (160) angeordnet ist, um die zwangsläufige Auslösung des Leistungsschalters (10) zu gewährleisten, wenn der mechanische Träger (12) von der eingeschobenen Stellung in die ausgezogene Stellung bewegt wird.

8. Einschiebbarer und ausziehbarer Mechanismus gemäss Anspruch 7, dadurch gekennzeichnet, dass der Steuerhebel (160) mit einer Rückholfeder (162) verbunden ist, welche das genannte Verriegelungsglied (120) in die Verriegelungsrichtung holt, und dass die Zurückhaltmittel der Schienen (60, 62) eine Hauptverzahnung (128) und eine Hilfskerbe (176) aufweisen, die einander gegenüber längs versetzt sind, um eine erste bidirektionale positive Verriegelung des beweglichen Trägers (12) zu bilden, wenn der Leistungsschalter (10) in die eingeschobene Stellung kommt, und bzw. eine zweite einseitig gerichtete Verriegelung (178) des genannten Trägers zu bilden, um in ausgezogener Stellung das Herausfahren des Leistungsschalters (10) zu verhindern, aber ein Einschieben zu ermöglichen, wobei der Steuerhebel (160) einen Anschlag (170) aufweist, der mit einer Rampe (168) des Ausziehgriffes (130) zusammenarbeitet bei Herstellung der ersten mechanischen Verbindung, und eine Achse (184), die von einem Nocken (90, 92) der Betätigungsvorrichtung (84, 82) bei Herstellung der zweiten mechanischen Verbindung angetrieben wird.

9. Einschiebbarer und ausziehbarer Mechanismus gemäss Anspruch 8, dadurch gekennzeichnet, dass jede Schiene (60, 62) des mechanischen Trägers (12) einen Flansch (68, 70) aufweist, auf den verschiebbar der Ausziehgriff (130) montiert ist, und mit einem Kupplungsglied (96), das mit dem genannten Nocken (90, 92) der Betätigungsvorrichtung (84, 82) zusammenarbeiten kann, wobei das hintere Ende jeder Schiene (60, 62) abgeschrägt ist, um mit einer Betriebsvorrichtung (192) eines Isolierklappensystems (194) zusammenzuarbeiten, wobei die genannte Vorrichtung ein Paar Steuerbacken (196, 198) aufweist, die gelenkig auf einer Achse (200) angeordnet sind, welche von einer Seitenwand (52, 54) des Gestells (14) getragen wird.

10. Einschiebbarer und ausziehbarer Mechanismus gemäss Anspruch 7, mit einer Mehrzahl von Hilfs-Sicherheitselementen, die in einem vorderen Schild (142) des Gestells (14) angeordnet sind, und mit.

einem Riegel (204), der einen beweglichen Bügel mit Zurückhaltschlitzen aufweist, die durch Verklinkung mit den genannten Hilfselementen in einer ersten Verriegelungsstellung zusammenarbeiten, um die Betätigung der Betätigungsvorrichtung (84, 82) zu verbieten,

einer ersten Oeffnung (216) zum Durchgang der Betätigungskurbel (84) der Betätigungsvorrichtung mit Zahnrad (80) und Steuerschraube, wobei der genannte Riegel (204) eine zweite Oeffnung (214) aufweist, die mit der ersten Oeffnung (216) des Schilds (142) ausgerichtet werden kann, um die Betätigung der Steuerschraube (82) durch die Kurbel (84) in einer zweiten Entriegelungsstellung des Bügels,

eine feste Hülse (220), die in Längsrichtung mit einer dritten Oeffnung (222) des Schildes (142) ausgerichtet ist, um die aus mehreren beweglichen Stücken bestehende Kurbel (84) unterzubringen,

wobei einer der Flansche (68, 70) des mechanischen Trägers (12) mit dem Riegel (204) interferiert und die Betätigung der Kurbel (84) verbietet, wenn der Leistungsschalter (10) nicht genügend ins Innere des Gestells (14) geschoben wird, von seiner ausgefahrenen Stellung in die ausgezogene Stellung.

## Claims

1. A reversible draw-in and draw-out mechanism for an extractible multipole electrical circuit breaker (10), equipped with main circuits with terminals (28, 30) and auxiliary circuits associated with a connection device (42) having fixed connectors (44, 46) and interacting movable connectors (48, 50), the circuit breaker being mounted on a movable mechanical support (12) inside a fixed chassis (14) in the form of a housing having a front opening (56), two opposite side walls (52, 54), and a fixed rear support panel (32) for connection of the main terminals (28, 30) of each pole, the mechanical support (12) of the circuit breaker (10) being guided by means of a pair of slide plates (64, 66) symmetrically fixed to the side walls (52, 54) of the chassis (14), and extending parallel in the longitudinal draw-in direction, said mechanism (78) comprising an operating device (82, 84) associated with a movement transmission system capable of occupying a first "drawn-in" position in which the main and auxiliary circuits of the circuit breaker (10) are connected, a second "test" position in which the main circuits are disconnected and the auxiliary circuits are connected, and a third "drawn-out" position in which the main and auxiliary circuits are disconnected, characterized in that the fixed connectors (44, 46) of the auxiliary circuits connection device (42) are securely united to the circuit breaker (10) and that the movement transmission system of the reversible mechanism (78) comprises a first mechanical link between the operating device (82, 84) and a drive device (94) of the movable connectors (48, 50) of the connection device (42) during the actuation phase corresponding to the interval provided between the second and third positions, and a second mechanical link between the operating device (82, 84) and a coupling device (96) of the movable mechanical support (12) of the circuit breaker (10) during another actuation phase corresponding to the interval provided between the second and first positions, the assembly being arranged so that the first mechanical link is active when the second mechanical link is broken, and vice-versa, enabling the fixed (44, 46) and movable (48, 50) connectors of the auxiliary circuits to be connected or disconnected when the circuit breaker (10) remains immobile.

2. A reversible draw-in and draw-out mechanism according to claim 1, characterized in that:

the opposite vertical side faces of the insulated case (16) housing the circuit breaker (10) comprise latching devices (74) positioned on the mechanical support (12),

the fixed connectors (44, 46) of the connection device (42) are located on one of the upper or lower horizontal faces (47) of the case (16), the movable mechanical support (12) of circuit breaker (10) is equipped with a pair of rails (60, 62) capable of sliding in the corresponding slide plates (64, 66) of the chassis (14), the coupling device (96) of the second mechanical link is disposed on a flange (68, 70) fixed to each rail (60, 62).

3. A reversible draw-in and draw-out mechanism according to claim 1, characterized in that the drive device (94) is arranged so as to cause a vertical translation movement of the movable connectors (48, 50) when the first mechanical link is made and the second mechanical link is broken, said movement being perpendicular to the longitudinal draw-in or draw-out direction of the main circuits of the circuit breaker (10), and the movable connectors (48, 50) of the connection device (42) are supported by a cross-piece (110) coupled to two symmetrical rods (108) of the drive device (94), and extending parallel to the horizontal face of the case (16) on which the corresponding fixed connectors (44, 46) are located.

4. A reversible draw-in and draw-out mechanism according to claim 1, characterized in that the reversible mechanism operating device (78) comprises:

an operating screw (82) associated with a crown-wheel device (80) cooperating with a transmission pinion (86) keyed onto a rotating shaft (88),

and at least one cam (90, 92) fixed to said shaft (88) to control alternately the movable connector drive device (94) and the coupling device (96) of the mechanical support (12), said rotating cam (90, 92) having a pin (104) capable of engaging in a groove (102), arranged in an intermediate lever (98) of the drive device (94) when the first mechanical link is made, and a notch (118) designed to drive the coupling device (96) of the mechanical support (12) when the second mechanical link is made.

5. A reversible draw-in and draw-out mechanism according to claims 4, characterized in that the intermediate lever (98) of the drive device (94) is pivotally mounted on a spindle (100) securedly united to the corresponding side wall (52, 54) of the chassis (14), said groove (102) being arranged at one of its ends, whereas the other end is articulated on the vertical rod (108) connected to the cross-piece (110), inserted with clearance in a longitudinal slot (116) arranged in an extension (114) of each rod (108), the slot (116) having a length corresponding to the circuit breaker (10) draw-in or draw-out travel when the second mechanical link is made.

6. A reversible draw-in and draw-out mechanism according to claim 1, characterized in that the connection device (42) comprises a first fixed connector (46) linked with an electronic trip release (17) of the circuit breaker, and a second fixed connector (44) linked to electrical measuring, monitoring and indication auxiliaries.

7. A reversible draw-in and draw-out mechanism for an extractible electrical circuit breaker (10), equipped with main circuits with terminals (28, 30) and auxiliary circuits associated with a connection device (42), capable of occupying a first "draw-in" position in which the main and auxiliary circuits of the circuit breaker (10) are connected, a second "test" position in which the main circuits are disconnected and the auxiliary circuits are connected, and a third "drawn-out" position in which the main and auxiliary circuits are disconnected, the circuit breaker being mounted on a movable mechanical support (12) inside a fixed chassis (14) in the form of a housing having a front opening (56)), two opposite side walls (52, 54), and a fixed rear support panel (32) for connection of the main terminals (28, 30) of each pole, said mechanism cooperating with means of locking the circuit breaker (10) in the drawn-in and drawn-out positions, characterized in that the movable mechanical support (12) of the circuit breaker (10) comprises:

a pair of symmetrical rails (60, 62) mounted with longitudinal sliding in the corresponding slide plates (64, 66) fixed to the opposite side walls (52, 54) of the chassis (14), the circuit breaker (10) having at least one latching device (74) positioned in an interacting device (72) of each rail (60, 62),

a locking system equipped with a locking device (120) operating in conjunction with retaining means (128, 176) of the rails (60, 62) to ensure mechanical locking of the circuit breaker (10) in the slide plates (64, 66) in the drawn-in and drawn-out positions, said locking device (120) being securedly united to an operating lever (160) pivotally mounted on a spindle (122) of the chassis (14),

a first mechanical link (168, 170) between said operating lever (160) and an extraction hand-grip (130), capable of causing unlatching of the locking system by unlocking the locking device (120) and the retaining means (128, 176),

and a second mechanical link arranged between the transmission system of the operating device (84, 82) and said operating lever (160) to ensure forced tripping of the circuit breaker (10) when the mechanical support (12) is moved from the drawn-in position to the drawn-out position.

8. A draw-in and draw-out mechanism according to claim 7, characterized in that the operating lever (160) is associated with a return spring (162) biaising said locking device (120) in the locking direction, and that the retaining means of the rails (60, 62) comprise a main latch (128) and an auxiliary notch (176) longitudinally staggered in relation to one another to form respectively a first positive two-way locking of the movable support (12) when the circuit breaker (10) reaches the drawn-in position, and a second one-way latching (178) of said support in the drawn-out position preventing the circuit breaker (10) from being extracted but allowing it to be drawn in, the operating lever (160) comprising a pin (170) cooperating with a ramp (168) of the extraction hand-grip (130) when the first mechanical link is made, and a spindle (184) capable of being driven by a cam (90, 92) of the operating device (84, 82) when the second mechanical link is made.

9. A draw-in and draw-out mechanism according to claim 8, characterized in that each rail (60, 62) of the support mechanism (12) comprises a flange (68, 70) on which the extraction hand-grip (13) is mounted in translation, and having a coupling device (96) capable of cooperating with said cam (90, 92) of the operating device (84, 82), the rear end of each rail (60, 62) being bevelled to cooperate with an actuating device (192) of an insulating shutter system (194), said device comprising a pair of operating jaws (196, 198) articulated on a spindle (200) supported by a side wall (52, 54) of the chassis (14).

10. A draw-in and draw-out mechanism according to claim 7, having a plurality of auxiliary safety devices arranged in a front escutcheon (142) of the chassis (14), and comprising:

a locking bolt (204) comprising a movable flange having retaining notches, capable of cooperating by engaging with said auxiliary devices in a first locking position, in such a way as to prevent the operating device (84, 82) from being actuated,

a first orifice (216) through which a handle (84) actuating the crown-wheel and screw operating device (80) passes, said locking bolt (204) being provided with a second orifice (214) able to be aligned with the first interacting orifice (216) of the escutcheon (142) to enable the operating screw (82) to be actuated by means of the handle (84) in a second unlocking position of the flange,

a fixed sleeve (220) longitudinally aligned with a third orifice (222) of the escutcheon (142) for storing the handle (84) articulated in several parts, one of the flanges (68, 70) of the mechanical support (12) interfering with the locking bolt (204) preventing the handle (84) from being actuated when the circuit breaker (10) is insufficiently pushed into the chassis (14) from the extraction position to the drawn-out position.

EP 0 236 179 B1

FIG. 1

Position débrochée

FIG. 2

1

FIG. 3

Position test

FIG. 4

FIG. 5

Position embrochée

FIG. 6

FIG. 7

FIG. 8

FIG.9

FIG.10

5

FIG. 11

FIG. 12

FIG.15

FIG.13

EP 0 236 179 B1

FIG. 14

EP 0 236 179 B1

Position embrochée

126  162  164  180  176  128  62  66

122

166

184

174

160

120

156

70

130

158

172  168  170

FIG. 16

9

EP 0 236 179 B1

Position débrochée

162   160   180   176   126   62   128   66

178

120

184

122

156   168   70   170   172   130

FIG. 17

10

FIG.18

EP 0 236 179 B1

FIG. 19

FIG. 20

FIG. 21

FIG. 22

FIG. 23

FIG. 24